# EUROPEAN PATENT APPLICATION

(11) **EP 2 602 401 A1**
(43) Date of publication of application: **12.06.2013**
(21) Application number: 12195937.3
(22) Date of filing: 06.12.2012
(51) Int. Cl.: E04F 10/06, E06B 9/46

(54) **Anchoring system for anchoring an end strip of an awning screen in a profile element, method of anchoring, awning screen provided with an anchoring system.**

(30) Priority: 06.12.2011 NL 2007924
(71) Applicant: van den Maagdenberg, Antonius Johannes Josephus, 4714 SB Sprundel (NL)
(72) Inventor: van den Maagdenberg, Antonius Johannes Josephus, 4714 SB Sprundel (NL)
(74) Representative: Hylarides, Paul Jacques

(57) **Abstract**

Anchoring system for anchoring an end strip of an awning screen in a profile element, comprising:
- an elongate and flat placing strip (1) of a given width and thickness; and
- an elongate clamping strip (3) consisting of two elongate and mutually opposite clamping walls (4), the respective upper sides of which clamping walls lie against each other, and the respective undersides of which clamping walls are fixedly connected to each other via a connecting body (6) which simultaneously holds the undersides at a distance from each other,
wherein the clamping strip, as seen in cross-section transversely of the longitudinal axis thereof, encloses an inner space (10) with a height equal to or greater than the width of the placing strip.

## Description

The present invention relates to an anchoring system for anchoring an end strip of an awning screen in a profile element, and to the use thereof.

Known from the Netherlands application NL 1029611 is an awning, wherein the awning screen is unrolled from a roller and tensioned by means of an opposite pull beam in which an end strip of the awning screen is anchored.

Usual in the field is the following manner of anchoring the screen in the pull beam: The end strip of the awning screen is folded double along the length to form a hem, wherein the folded-back end edge is fixed onto the screen, usually by fusing, or by stitching using a thread. An elongate, round rod is inserted into the inner space of the hem. The inner space of the hem is thus filled, whereby the hem has a fixed volume largely determined by the dimensions of the rod. The end result is that the end strip of the awning screen is permanently thickened.

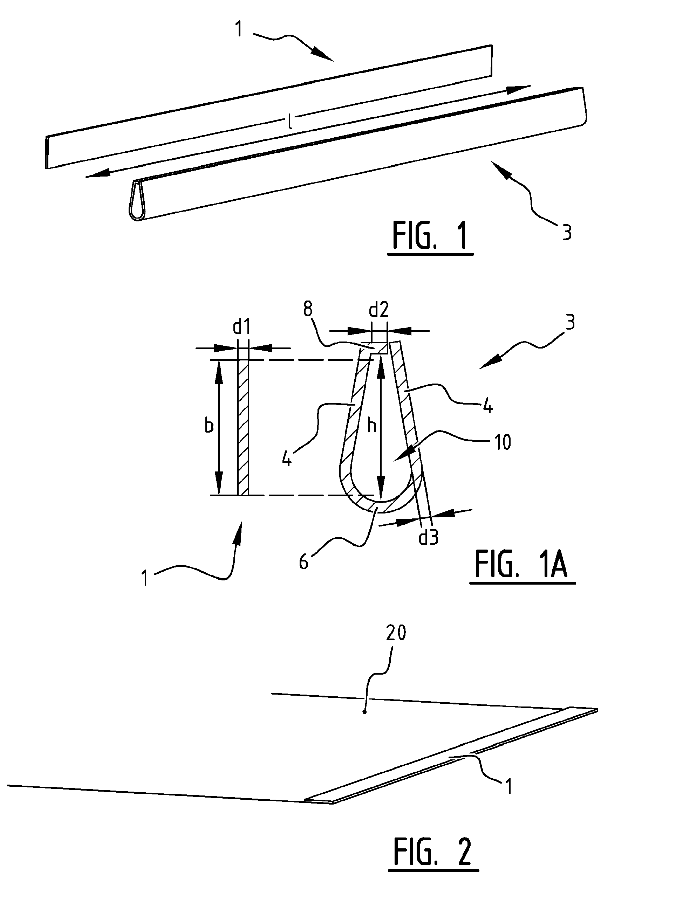

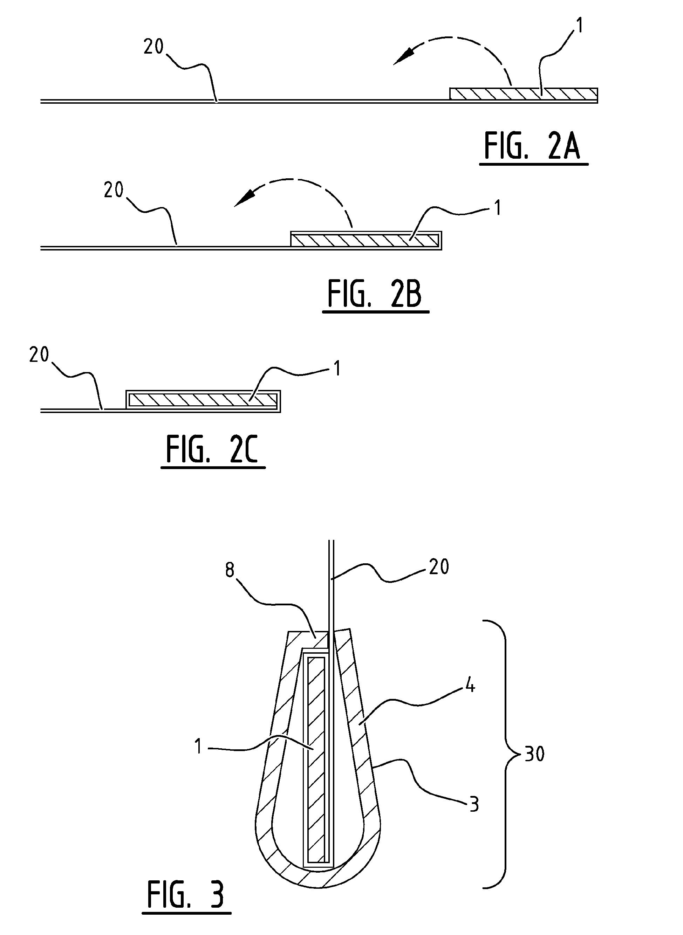

This construction makes the end strip suitable for anchoring in a profile element in which a longitudinal channel is provided, the channel having a narrowed entrance. In NL 1029611 (particularly in component 6 in figure 2 thereof) such a channel is shown in the roller onto which the screen is rolled. The diameter of the rod is a fraction smaller than the inner diameter of the channel. The thickened end strip of the awning screen can thus be inserted laterally into the channel of the profile element. The narrowed entrance of the channel makes it impossible for the thickened end strip to leave the channel via the entrance, and the screen is thus anchored in the profile element.

Using the profile element the awning screen can be pulled tight and tensioned to form any desired surface and held in a fixed position, while the anchoring of the screen in the element is secured.

The known manner of anchoring has several inherent drawbacks for which no solution has heretofore been found. These drawbacks are associated with the forming of a hem and accommodating therein an object which fills the inner space of the hem.

The usual manner of forming and fixing a hem is by fusing the folded end edge with the screen. This method thus has a step which requires the use of energy in the form of heat, this being undesirable from a cost viewpoint. The end result of the fusing is moreover clearly visible as a seam of deformed screen material which protrudes above the profile element. This end result detracts from the aesthetic value of the screen and can also undermine the strength thereof. Alternatively, a hem can be fixed by stitching with thread, although it is here also the case that the stitching remains visible above the profile element. Stitching is furthermore a more labourious process than fusing.

The present invention has for its object to obviate or in any case reduce one or more of the above stated drawbacks of the prior art.

This object is achieved according to a first aspect of the invention by providing an anchoring system for anchoring an end strip of an awning screen in a profile element, comprising:
- an elongate and flat placing strip of a given width and thickness; and
- an elongate clamping strip consisting of two elongate and mutually opposite clamping walls, the respective upper sides of which clamping walls lie against each other, and the respective undersides of which clamping walls are fixedly connected to each other via a connecting body which simultaneously holds the undersides at a distance from each other,
   wherein the clamping strip, as seen in cross-section transversely of the longitudinal axis thereof, encloses an inner space with a height equal to or greater than the width of the placing strip.

The two components of the anchoring system form a co-acting whole when they are used in the following manner:
- the placing strip and the clamping strip are brought to a length corresponding to the length of the end strip of the awning screen;
- the placing strip is placed on the end strip of the awning screen;
- the end strip is folded double so that a folded-double end strip is obtained inside which the placing strip is present;
- the folded-double end strip is fixed in the inner space of the clamping strip in a manner such that the awning screen above the end strip is held clamped between the upper sides of the clamping strip.

An awning screen is thus obtained with an end strip which is permanently thickened, without a hem having to be formed by fusing or stitching the end edge onto the screen. The drawbacks of the prior art are thus obviated.

The thickened end strip can then be placed in simple manner into a profile element with a channel with narrowed entrance in order to anchor the screen.

The method of using and connecting the anchoring system to the end strip of the screen will be discussed in further detail with reference to the second aspect of the invention.

The clamping strip according to the invention allows the abutting upper sides to be held a short distance from each other with the exertion of a light force, wherein the upper sides are therefore temporarily not abutting. As soon as this light force is no longer being exerted the clamping walls will spring back to the original position, in which the upper sides take up an abutting position relative to each other. The clamping walls thus exert a clamping force on each other.

In the anchoring system according to the invention a side of the placing strip is preferably coated with an adhesive. When the side of the placing strip coated with adhesive is arranged on the end strip of the screen, the connection between placing strip and screen is strengthened, thereby improving the robustness of the anchoring system as a whole.

In the anchoring system according to the invention the upper side of at least one of the clamping walls is more preferably provided with a thickened portion, with which thickened portion the upper side lies against the opposite upper side. This thickened portion functions as stop for the folded-double end strip when it is clamped fixedly in the inner space of the clamping strip.

When an awning is used, pulling forces are exerted on the folded-double end strip which could pull the end strip out of the clamping strip. Providing the stop in the form of a thickened portion on the clamping wall creates an additional barrier against these pulling forces and the adverse effect thereof.

According to a preferred embodiment of the anchoring system according to the invention, the clamping strip is manufactured integrally and preferably manufactured from a flexible plastic, for instance PVC.

An integral clamping strip allows the clamping strip to be formed in simple manner by for instance injection moulding. It is recommended here to use a flexible plastic such as a thermoplastic, in particular PVC. This material has been found highly suitable for the clamping function of the clamping strip: the material is to some extent flexible, wherein a light force is necessary. The material reassumes its original shape again as soon as the light force is no longer exerted.

According to a particular preferred embodiment of the anchoring system according to the invention, the clamping strip, as seen in cross-section transversely of the longitudinal axis thereof, has a modified U-shape, wherein: the curved part of the letter U represents the connecting body, the upright legs of the letter U represent the two clamping walls, and wherein the U-shape is adapted such that the upright legs make contact with each other at the top.

The shape of such an embodiment of the clamping strip can be compared to some extent to 'poster strips', i.e. clamping strips which are used to hang posters and which are clamped to the top and bottom sides of a poster.

The components of the anchoring system according to the invention are preferably dimensioned as follows:
The thickness of the material of the clamping strip is preferably 0.6 to 1.0 mm, and with special preference about 0.8 mm. Such a thickness allows the material to be bent to some extent and the clamping walls to spring back sufficiently to their original position.
The width of the placing strip is preferably 8 to 12 mm, in particular about 10 mm.
The thickness of the placing strip is preferably 0.6 to 1.0 mm, in particular about 0.8 mm.
The thickened portion on the upper side of the clamping wall is preferably 0.6 to 1.0 mm thick, more preferably about 0.8 mm. The thickness of the thickened portion is advantageously chosen such that it roughly corresponds to the thickness of the placing strip. The thickened portion is thus effective as stop for the thickened end strip.

In the anchoring system according to the invention the placing strip is preferably manufactured from flexible plastic, for instance PVC. PVC is a stiff material which is slightly flexible and springs back to the original shape, which is advantageous for the invention.

According to a second aspect, the invention relates to a method for anchoring an end strip of an awning screen in a profile element which comprises a longitudinal channel with a narrowed entrance, wherein an anchoring system according to the invention is applied, comprising the steps of:
- adjusting the length of the placing strip and the clamping strip of the anchoring system to the length of the end strip of the awning screen;
- arranging the placing strip on the end strip of the awning screen;
- folding the end strip double so that a folded-double end strip is obtained inside which the placing strip is present;
- fixing the folded-double end strip in the inner space of the clamping strip in a manner such that the awning screen above the end strip is held clamped between the upper sides of the clamping strip;
- placing in the profile element the formed assembly of the clamping strip and the folded-double end strip clamped fixedly therein.

This method of anchoring has the above discussed advantages that a thickened end strip is formed without a hem having to be fixed by fusing or stitching. It is noted for the sake of completeness that the dimensions of the clamping strip and the inner space in the channel are chosen such that the clamping strip can be inserted laterally into the channel but cannot be moved out of the channel via the narrowed entrance.

When a side of the placing strip is coated with an adhesive, this side is then preferably arranged on the awning screen in the method according to the invention.

It is recommended in the method according to the invention that folding double of the end strip is performed more than once, and with particular preference two or three times.

The placing strip is thus tightly wrapped in the end strip, this ensuring a durable connection between the end strip and the screen.

According to a third aspect of the invention, an awning screen is provided which is provided with an anchoring system according to the invention, wherein the awning screen comprises a folded-double end strip inside which the placing strip is present, and wherein the folded-double end strip is fixed in the inner space of the clamping strip.

Such an awning screen provides the advantages already described above of the new type of anchoring according to the invention.

A profile element is preferably connected to the folded-double end strip of the awning screen according to the invention, which profile element comprises a longitudinal channel with a narrowed entrance, wherein the assembly of the clamping strip with the folded-double end strip fixed therein is anchored in the profile element.

The invention relates in more general sense to an awning system comprising an awning screen according to the third aspect of the invention, wherein the profile element is disposed movably for the purpose of tensioning the awning screen.

Finally, the invention relates to an awning system comprising an awning screen according to the invention, wherein the profile element is disposed movably for the purpose of tensioning the awning screen.

The invention will be elucidated hereinbelow with reference to the accompanying figures, in which:
Figure 1 is a perspective view of a preferred embodiment of the anchoring system according to the invention;
Figure 1A is a cross-sectional view of the placing strip and the clamping strip of fig. 1;
Figure 2 is a perspective view of an awning screen on which a placing strip is arranged according to the method of the invention;
Figures 2A, 2B and 2C are cross-sectional views of the end strip of the awning screen during successive stages of folding double according to the method of the invention;
Figure 3 is a cross-sectional view of the end strip of an awning screen provided with the anchoring system according to the third aspect of the invention;
Figure 4 is a cross-sectional view of the end strip of an awning screen provided with an anchoring system and wholly inserted into a profile element of an awning system.

Fig. 1 is a perspective view of an elongate placing strip 1 and an elongate clamping strip 3, both with a length 1 which can vary as required.

Fig. 1A shows in cross-section more details of the component of fig. 1. Placing strip 1 has a thickness d1 of about 0.8 mm and a width b of about 10 mm, and is manufactured from PVC.

Clamping strip 3 comprises two mutually opposite clamping walls 4, the respective upper sides of which lie against each other but are not fixedly connected to each other. A curved connecting body 6 connects the undersides of clamping walls 4 to each other and simultaneously holds them a distance from each other. The upper side of one of the clamping walls is provided with a thickened portion 8 which lies against the upper side of the opposite clamping wall. The thickened portion has a thickness d2 of about 0.8 mm. Clamping strip 3 encloses an inner space 10, the height h of which is equal to or greater than width b of the placing strip. The clamping strip is manufactured from PVC, and the material has a thickness d3 of about 0.8 mm.

Figure 2 is a perspective view of an end strip of an awning screen 20 on which a placing strip 1 is arranged on the outermost part of the end strip.

Figure 2A shows in cross-section the same situation as in fig. 2. The thickness of the awning screen is shown enlarged to some extent. The side of placing strip 1 which lies on screen 20 is provided with an adhesive with which placing strip 1 is adhered to the screen. The broken arrow indicates the folding direction so that a folded-double end strip is obtained as shown in fig. 2B. This procedure is repeated once more so that an end result is obtained, as shown in fig. 2C, of a folded-double end strip of screen 20 which is wrapped several times around placing strip 1.

Figure 3 shows in cross-section the folded-double end strip of screen 20 as obtained in fig. 2C which is then placed in clamping strip 3. In order to achieve this result, the folded-double end strip is inserted laterally via the open side of the clamping strip, while awning screen 20 which is present above the end strip is guided between the right-hand clamping wall 4 and thickened portion 8. The right-hand clamping wall 4 and thickened portion 8 exert a light clamping force on each other, and so also on the awning screen 20 therebetween. Thickened portion 8 moreover functions as a stop which holds in the folded-double end strip 20 with the wrapped placing strip 1 therein. The whole 30 can be seen as a thickened end strip of awning screen 20.

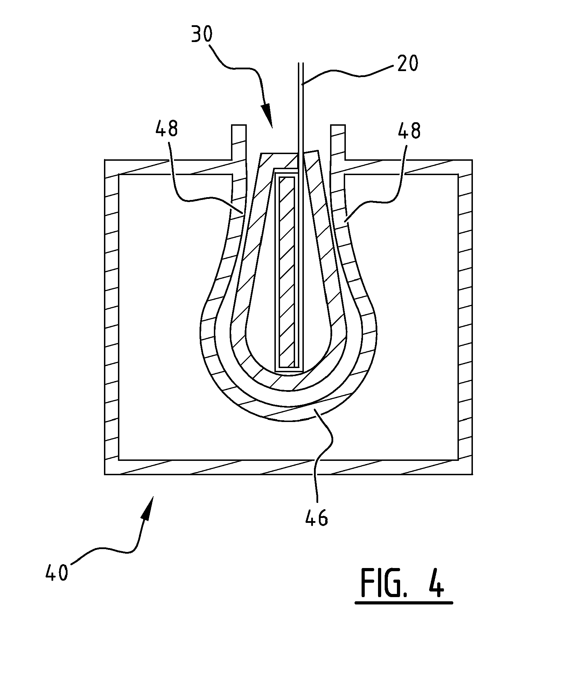

Figure 4 shows in cross-section the thickened end strip 30 of awning screen 20 according to fig. 3 which is anchored in a profile element 40. The profile element is provided with an internal channel 46, the entrance 48 to which is narrowed. The thickened end strip is inserted laterally into profile element 40 via an open side.

Adjusting the dimensions of the anchoring system and the channel of the profile element to each other in suitable manner achieves a suitable anchoring of the awning screen without a fixed hem having to be made in the screen.

## Claims

1. Anchoring system for anchoring an end strip of an awning screen in a profile element, comprising:
- an elongate and flat placing strip of a given width and thickness; and
- an elongate clamping strip consisting of two elongate and mutually opposite clamping walls, the respective upper sides of which clamping walls lie against each other, and the respective undersides of which clamping walls are fixedly connected to each other via a connecting body which simultaneously holds the undersides at a distance from each other,
wherein the clamping strip, as seen in cross-section transversely of the longitudinal axis thereof, encloses an inner space with a height equal to or greater than the width of the placing strip.

2. Anchoring system as claimed in claim 1, wherein a side of the placing strip is coated with an adhesive.

3. Anchoring system as claimed in any of the foregoing claims, wherein the upper side of at least one of the clamping walls is provided with a thickened portion, with which thickened portion the upper side lies against the opposite upper side.

4. Anchoring system as claimed in any of the foregoing claims, wherein the clamping strip is manufactured integrally and preferably manufactured from a flexible plastic, for instance PVC.

5. Anchoring system as claimed in any of the foregoing claims, wherein the clamping strip, as seen in cross-section transversely of the longitudinal axis thereof, has a modified U-shape, wherein: the curved part of the letter U represents the connecting body, the upright legs of the letter U represent the two clamping walls, and wherein the U-shape is adapted such that the upright legs make contact with each other at the top.

6. Anchoring system as claimed in any of the foregoing claims, wherein the thickness of the material of the clamping strip is 0.6 to 1.0 mm, preferably about 0.8 mm.

7. Anchoring system as claimed in any of the foregoing claims, wherein the width of the placing strip is 8 to 12 mm, preferably about 10 mm.

8. Anchoring system as claimed in any of the foregoing claims, wherein the thickness of the placing strip is 0.6 to 1.0 mm, preferably about 0.8 mm.

9. Anchoring system as claimed in any of the foregoing claims, wherein the placing strip is manufactured from flexible plastic, for instance PVC.

10. Method for anchoring an end strip of an awning screen in a profile element which comprises a longitudinal channel with a narrowed entrance, wherein an anchoring system as claimed in any of the foregoing claims is applied, comprising the steps of:
- adjusting the length of the placing strip and the clamping strip of the anchoring system to the length of the end strip of the awning screen;
- arranging the placing strip on the end strip of the awning screen;
- folding the end strip double so that a folded-double end strip is obtained inside which the placing strip is present;
- fixing the folded-double end strip in the inner space of the clamping strip in a manner such that the awning screen above the end strip is held clamped between the upper sides of the clamping strip;
- placing in the profile element the formed assembly of the clamping strip and the folded-double end strip clamped fixedly therein.

11. Method as claimed in claim 10, wherein folding double of the end strip is performed more than once, and preferably two or three times.

12. Awning screen provided with an anchoring system as claimed in any of the foregoing claims 1-9, wherein the awning screen comprises a folded-double end strip inside which the placing strip is present, and wherein the folded-double end strip is fixed in the inner space of the clamping strip.

13. Awning screen as claimed in claim 12, wherein a profile element is connected to the folded-double end strip, which profile element comprises a longitudinal channel with a narrowed entrance, wherein the assembly of the clamping strip with the folded-double end strip fixed therein is anchored in the profile element.

14. Awning system comprising an awning screen as claimed in claim 12 or 13, wherein the profile element is disposed movably for the purpose of tensioning the awning screen.
